# EUROPÄISCHE PATENTANMELDUNG

(11) **EP 1 298 529 A2**
(43) Veröffentlichungstag der Anmeldung: **02.04.2003**
(21) Anmeldenummer: 02102355.1
(22) Anmeldetag: 12.09.2002
(51) Int. Cl.: G06F 9/46

(54) **Proxy-Einheit und Verfahren zum rechnergestützten Schützen eines Applikations-Server-Programms**

(30) Priorität: 28.09.2001 DE 10147889
(71) Anmelder: SIEMENS AKTIENGESELLSCHAFT, 80333 München (DE)
(72) Erfinder: Lehmann, Dirk, 81735, München (DE); Trommler, Peter, Dr., 81927, München (DE)

(57) **Zusammenfassung**

Es wird eine Anwendungsschicht-codierte Nachricht in einer Proxy-Einheit empfangen und gemäß einem Anwendungsschicht-Protokollformat decodiert. Es wird überprüft, ob die decodierte Nachricht mindestens ein vorgegebenes Angriffs-Prüf-Kriterium erfüllt und es werden nur die Nachrichten an das zu schützende Applikations-Server-Programm übertragen, welche das vorgegebene Angriffs-Prüf-Kriterium nicht erfüllen.

## Beschreibung

Die Erfindung betrifft eine Proxy-Einheit, ein Verfahren zum rechnergestützten Schützen eines Applikations-Server-Programms sowie eine Anordnung mit einer Proxy-Einheit und einer Einheit zum Ausführen eines Applikations-Server-Programms.

Die Kommunikation zwischen einer Vielzahl miteinander über ein Telekommunikationsnetz, beispielsweise das Internet, gekoppelten Rechnern erfolgt üblicherweise gemäß einer Rechnernetzarchitektur (Kommunikationsmodell), welche in eine Vielzahl von Kommunikationsschichten mit jeweils den Kommunikationsschichten eindeutig zugeordneten Aufgaben im Rahmen des Kommunikationsablaufs, aufgeteilt ist.

Ein Beispiel für ein solches Schichtenmodell ist das OSI-Referenzmodell (**O**pen **S**ystem **I**nterconnection-Referenzmodell), welches in [1] beschrieben ist.

Gemäß dem OSI-Referenzmodell sind für die Bereitstellung der gesamten Kommunikation zwischen zwei Applikations-Server-Programmen, welche üblicherweise auf zwei über das Internet miteinander gekoppelten Rechnern, folgende Schichten auf:
- Schicht 1: Bitübertragungsschicht (Physical Layer),
- Schicht 2: Sicherungsschicht (Data Link Layer),
- Schicht 3: Vermittlungsschicht (Network Layer),
- Schicht 4: Transportschicht (Transport Layer),
- Schicht 5: Sitzungsschicht (Session Layer),
- Schicht 6: Darstellungsschicht (Presentation Layer), und
- Schicht 7: Anwendungsschicht (Application Layer), auch als Verarbeitungsschicht bezeichnet.

Die Bitübertragungsschicht (Schicht 1) betrifft die Übertragung von einzelnen Bits über einen Kommunikationskanal. Die Hauptaufgabe der Sicherungsschicht (Schicht 2) ist es, eine "rohe Übertragungseinrichtung" in eine Leitung zu verwandeln, welche sich der Vermittlungsschicht (Schicht 3) frei von unerkannten Übertragungsfehlern darstellt. Die Vermittlungsschicht wiederum betrifft die Steuerung des Teilnetzbetriebes, insbesondere das Routing von Datenpaketen.

Die Transportschicht (Schicht 4) hat beim Senden von Daten als grundlegende Aufgabe, Daten von der Sitzungsschicht (Schicht 5) zu übernehmen, gegebenenfalls in kleinere Dateneinheiten zu zerlegen und sie anschließend an die Vermittlungsschicht zu übergeben und dafür zu sorgen, dass eine korrekte Ende-zu-Ende-Kommunikation mit dem Ziel-Rechner gewährleistet ist.

Die Sitzungsschicht ermöglicht es Benutzern an verschiedenen Maschinen, Sitzungen untereinander aufzubauen.

In der Darstellungsschicht (Schicht 6) werden bestimmte Funktionen ausgeführt, die durch ihre häufige Verwendung eine allgemein Lösung rechtfertigen, anstatt es jedem Benutzer zu überlassen, die damit verbundenen Aufgaben zu lösen. Ein typisches Beispiel für Aufgaben der Darstellungsschicht ist die Codierung von Daten auf standardisierte und vereinbarte Weise, beispielsweise gemäß der **A**bstract **S**yntax **N**otation.1 (ASN.1).

Die Anwendungsschicht (Schicht 7) schließlich stellt die oberste Schicht in dem OSI-Referenzmodell dar.

Im Weiteren wird unter Anwendungsschicht jede Schicht im Rahmen eines Kommunikations-Schichtenmodells verstanden, welche keine weitere Schicht mehr über ihr selbst aufweist, der sie Dienste bereitstellt. Somit werden von Elementen der Anwendungsschicht keinerlei Dienste für eine über ihr sich befindende Schicht bereitgestellt, sondern lediglich für Programme oder Elemente der Anwendungsschicht selbst.

Anschaulich ist die Anwendungsschicht diejenige Schicht, in der einem Benutzer die Daten einer Datenübertragung oder Datenfernverarbeitung unmittelbar zur Verfügung stehen. Funktionen innerhalb der Anwendungsschicht sind beispielsweise Funktionen, die bei der Kommunikation offener Systeme erfüllt werden müssen und die noch nicht von tieferen, sich unter der Anwendungsschicht befindlichen weiteren Kommunikationsschichten erfüllt wurden.

In der Anwendungsschicht sind Programme, welche im Weiteren als Applikations-Server-Programme bezeichnet werden, vorgesehen, welche zur Übertragung bereitgestellte Dienste der darunter liegenden Schichten in Anspruch nehmen. Ein Beispiel eines solchen Applikations-Server-Programms ist ein WWW-Browser-Programm (**W**orld **W**ide **W**eb-Browser-Programm), welches eine Kommunikation zwischen einem Client-Rechner (Client-Computer) und einem Server-Rechner (Server-Computer) ermöglicht auf der Basis des sogenannten HTTP-Protokolls (**H**yper**t**ext **T**ransfer **P**rotocol).

Anders ausgedrückt ist unter einem Applikations-Server-Programm, ein Server-Programm welches Dienste gemäß einem Protokoll der Anwendungsschicht einem Client-Anwendungsprogramm, beispielsweise einem WWW-Browser-Programm, bereitstellt. Ein Applikations-Server-Programm weist üblicherweise zusätzlich Prozeduren, anders ausgedrückt Programmkomponenten, auf, die Befehle gemäß dem Protokoll der Anwendungsschicht ausführen können.

Weitere Applikations-Server-Programme sind beispielsweise Programme welche ein Verzeichnisdienst, beispielsweise Naming Services (Directory Services) bereitstellen, das heißt welche den Dienst der Namenszuordnung und die Weitergabe der ermittelten Namenszuordnungen an nachfragende Dienste bereitstellt, beispielsweise die Bestimmung einer Adresse zu einem Namen, die Bestimmung einer Verteilerliste oder die Bestimmung eines Servers für eine Dienstleistung im Sinne eines Branchen-Telefonbuchs).

Diese Verzeichnisdienste können auch benutzerorientiert sein. Weitere Applikations-Server-Programme betreffen Terminals, in denen Dateitransfer, Zugriffskontrolle oder auch das Rechennetzmanagement (Beispiele hierfür sind das SNMP (**S**imple **N**etwork **M**anagement **P**rotocol) oder das CMIP (**C**ommon **M**anagement **I**nternet **P**rotocol)). Weiterhin sind Mail-Programme, das heißt Programme, welche den Dienst der Übermittlung elektronischer Nachrichten bereitstellen - auch als Mail-Programme bezeichnet - Applikations-Server-Programme innerhalb der Anwendungsschicht.

Insbesondere in der letzten Zeit werden im Rahmen des elektronischen Handels (Electronic Commerce) die WWW-Server-Programme unter Verwendung des HTTP-Protokolls verwendet, um den elektronischen Handel bereitzustellen.

Heutige WWW-Server-Programme, welche in einem WWW-Server-Computer installiert sind, sind jedoch aus diesem Grund häufig ein Angriffsziel für rechnergestützte Angriffe auf das jeweilige Applikations-Server-Programm, insbesondere auch direkt auf das WWW-Server-Programm.

Üblicherweise wird für den Angriff auf ein Server-Programm in einem Web-Server-Rechner ein Angriffsprogramm verwendet, welches unter Verwendung des HTTP-Kommunikationsprotokolls in das mittels des WWW-Server-Programms bereitgestellten E-Commerce-Systems eindringen. Das HTTP-Kommunikationsprotokoll und damit verbunden das Applikations-Server-Programm in der Anwendungsschicht ist über alle Schutzbarrieren hinweg freigeschaltet, das heißt in gemäß dem Protokoll der Anwendungsschicht decodierter Form sind Angriffe mittels des jeweiligen Angriffsprogramms mit den bekannten Mechanismen nicht schützbar. Ein solches Angriffsprogramm nutzt üblicherweise Schwachstellen in dem WWW-Server-Programm, das heißt in der Software des jeweiligen Web-Server-Rechners aus, beispielsweise Programmfehler.

Um solche Angriffe zu verhindern, das heißt um ein Schutzsystem für einen Web-Server bereitzustellen wird üblicherweise eine Firewall verwendet. Ein als Firewall eingerichteter Rechner lässt jedoch Angriffe, deren Struktur erst in gemäß dem Anwendungsprotokollformat decodierter Form erkennbar ist, ungefiltert durch, da die Schutzmechanismen einer Firewall lediglich auf der Ebene der Transportschichten (Transportschicht, Vermittlungsschicht) greifen.

Weiterhin ist ein Netzwerk-basiertes **I**ntrusion **D**etection **S**ystem (IDS) bekannt, bei dem jedoch ein Angriff lediglich erkannt und gemeldet werden kann, dieser jedoch nicht verhindert werden kann.

In einem Host-basierten Intrusion Detection System werden erst Modifikationen eines "geschützten Systems" infolge eines durchgeführten Angriffs gemeldet, wiederum können jedoch die Angriffe selbst nicht verhindert werden.

Schwachstellen in einem Applikations-Server-Programm, beispielsweise in einem WWW-Server-Programm können oftmals durch Installation eines Patches, das heißt durch Installation eines Aktualisierungsprogramms oder eines Teils eines Programms als Aktualisierung beseitigt oder verringert werden.

Die Installation des Patches erfolgt auf dem jeweiligen Web-Server. Nachteilig an dieser Vorgehensweise ist, dass häufig eine das Applikations-Server-Programm nutzende weitere Anwendung lediglich auf dem ursprünglichen Applikations-Server-Programm lauffähig ist, nicht jedoch kompatibel ist zu dem Applikations-Server-Programm inklusive dem zugefügten Patch-Programm, anders ausgedrückt dem aktualisierten Applikations-Server-Programm. Weiterhin ist ein das Applikations-Server-Programm üblicherweise nutzender weiteres Applikations-Server-Programm für einen gewissen Systemstand bzw. für ein vorgegebenes Applikations-Server-Programm zertifiziert und würde nach erfolgter Installation des Patches, das heißt des Patch-Programms, die Zertifizierung und damit die Gewährleistung des Herstellers verlieren. Oftmals hat ein Hersteller eines Programms oder eine das Applikations-Server-Programm nutzende Hardwarekomponente ihr Produkt für das Applikations-Server-Programm inklusive dem aktualisierenden Patch noch nicht frei gegeben.

Weiterhin ist an dieser Lösung nachteilig, dass ein solches Patch-Programm oftmals erst nach einer gewissen vergangenen Zeitspanne überhaupt verfügbar ist.

Alternativ könnte zur Beseitigung der Schwachstellen das System zu seinem eigenen Schutz abgeschaltet werden.

Eine dritte Möglichkeit zur Beseitigung der Schwachstellen liegt in der Einschränkung der Kommunikation der miteinander kommunizierenden Programme. Dies ist oftmals jedoch nicht erwünscht und trifft insbesondere auch Kommunikationspartner, für die diese Problematik überhaupt nicht zutrifft. Ferner können auch diejenigen Kommunikationspartner, die für eine Kommunikation mit dem Applikations-Server-Programm überhaupt noch zugelassen sind, dieses erreichen und möglicherweise unbeabsichtigt ein solches Angriffsprogramm mitübertragen oder unbeabsichtigt Übertrager des jeweiligen Angriffs sein.

Weiterhin ist es bekannt, Anti-Viren-Software, das heißt Anti-Viren-Programme zum Schutz von auf einem Rechner installierten Programmen und zum Schutz des Rechners selbst einzusetzen. Ein solches Anti-Viren-Programm kann zwar Viren im Dateisystem erkennen, verhindert jedoch gerade nicht einen direkten Angriff gegen das Applikations-Server-Programm und den Web-Server.

Weiterhin ist in [2] die Architektur des **S**ecurity **S**ockets **L**ayer (SSL) zur kryptographischen Sicherung eines Server-Programms in der Anwendungsschicht beschrieben.

In [3] ist die Architektur des sogenannten "Reverse Proxy" beschrieben, bei dem insbesondere zur Lastverteilung eingehende Schicht-7-Requests, das heißt Anforderungsnachrichten, welche für ein Applikations-Server-Programm in der Anwendungsschicht gedacht sind, verwendet wird. Eine solche Nachricht, welche von einem Client-Rechner über ein Telekommunikationsnetz zu dem Web-Server übermittelt wird, wird zunächst von einem Reverse-Proxy-Rechner empfangen, dort bis zu der Decodierung der Nachricht gemäß dem verwendeten Protokoll in der Anwendungsschicht decodiert, anschließend an einen verfügbaren Anwendungs-Server, das heißt einem Server, der das jeweilige gewünschte Applikations-Server-Programm bereit stellt, vorzugsweise somit einen Web-Server, unmittelbar weitergeleitet. Dies erfolgt derart, dass die decodierte Nachricht unmittelbar wieder gemäß dem verwendeten Anwendungsschicht-Kommunikationsprotokoll codiert wird und dann den weiteren Kommunikationsschichten übergeben wird, um auf diese Weise zu dem Web-Server übertragen zu werden.

Somit liegt der Erfindung das Problem zugrunde, ein Applikations-Server-Programm vor Angriffen zu schützen, die in einer Nachricht gemäß einem Protokoll der Anwendungsschicht codiert sind.

Das Problem wird mit der Proxy-Einheit, dem Verfahren zum rechnergestützten Schützen eines Applikations-Server-Programms sowie durch die Anordnung mit einer Proxy-Einheit und einer Einheit zum Ausführen eines Applikations-Server-Programms mit den Merkmalen gemäß den unabhängigen Patentansprüchen gelöst.

Eine Proxy-Einheit weist eine telekommunikationsnetzseitige Eingangsschnittstelle auf. Über, das heißt anders ausgedrückt, mittels der Eingangsschnittstelle können Anwendungsschicht-codierte Nachrichten empfangen werden.

Unter einer Proxy-Einheit ist erfindungsgemäß sowohl eine eigenständige Hardware-Einheit, das heißt beispielsweise ein eigenständiger Proxy-Rechner, als auch ein Computerprogramm, welches die Funktionalität der Proxy-Einheit auf der Ebene der Anwendungsschicht bereitstellt, zu verstehen.

Telekommunikationsnetzseitig ist in diesem Zusammenhang derart zu verstehen, dass die Eingangsschnittstelle der Proxy-Einheit Nachrichten, welche von einem Client-Rechner über das Telekommunikationsnetz, beispielsweise das Internet, an einen Applikationsserver, das heißt einen Server für das zu schützende Applikations-Server-Programm, sendet, mittels der Proxy-Einheit empfangen wird, bevor die jeweilige an das Applikations-Server-Programm gerichtete Nachricht an dieses weitergeleitet wird.

Die Proxy-Einheit weist ferner eine Decodier-Einheit auf zum Decodieren der empfangenen Anwendungsschicht-codierten Nachricht gemäß einem Anwendungsschichtprotokollformat, beispielsweise im Falle eines WWW-Server-Programms als Applikations-Server-Programm gemäß dem HTTP-Protokollformat. Wird als Applikations-Server-Programm beispielsweise ein Mail-Server-Programm geschützt, so ist die Decodiereinheit in diesem Zusammenhang derart eingerichtet, dass die Nachricht gemäß beispielsweise dem SMTP (**S**imple **M**ail **T**ransfer **P**rotocol) decodiert wird. Die mittels der Decodiereinheit decodierte Nachricht liegt anschließend im Klartext, vorzugsweise gemäß dem ASCII-Standard codiert, vor.

Die Decodiereinheit ist eingangsseitig mit der Eingangsschnittstelle gekoppelt und ausgangsseitig mit einem Filter, mit dem eine empfangene Nachricht herausgefiltert wird, wenn sie ein vorgegebenes Angriffs-Prüf-Kriterium erfüllt.

Unter "Angriffs-Prüf-Kriterium" ist in diesem Zusammenhang ein Informationselement zu verstehen, mit dem erkannt wird, dass es sich bei der Nachricht um eine Nachricht handelt, mit der ein Angriff auf das Applikations-Server-Programm unter Verwendung von des Anwendungs-Protokollformats durchgeführt werden soll.

Anders ausgedrückt wird somit mit dem Filter in der Proxy-Einheit jede Nachricht einer Überprüfung und eventuellen Filterung, das heißt einem Ausschluss zur Weiterleitung an das Applikations-Server-Programm unterzogen, wobei die Prüfung auf der obersten Schicht des Kommunikations-Schichtenmodells, vorzugsweise somit auf der Anwendungsschicht, erfolgt.

Ferner ist mit dem Filter eine Codiereinheit zum Codieren von einer nicht herausgefilterten Nachricht zu einer Proxy-Anwendungsschicht-codierten Nachricht gemäß dem Anwendungsschicht-Protokollformat vorgesehen.

Mit der Codiereinheit werden somit die als ungefährlich erachteten Nachrichten, welche das Angriffs-Prüf-Kriterium nicht erfüllen, wieder gemäß dem Anwendungsschicht-Protokollformat und gemäß den Protokollformaten der darunter liegenden Schichten codiert und einer rechnernetzseitigen Ausgangsschnittstelle, das heißt anders ausgedrückt einer Ausgangsschnittstelle, welche mit dem Anwendungs-Server selbst und damit mit dem Applikations-Server-Programm gekoppelt ist, zugeführt. Mittels der Ausgangsschnittstelle wird die Proxy-Anwendungsschicht-codierte Nachricht zu dem zu schützenden Applikations-Server-Programm übertragen.

Bei einem Verfahren zum rechnergestützten Schützen eines Applikations-Server-Programms wird eine Anwendungsschicht-codierte Nachricht in einer Proxy-Einheit empfangen und die empfangene anwendungsschichtcodierte Nachricht wird gemäß einem Anwendungsschicht-Protokollformat decodiert. Anschließend wird die decodierte Nachricht dahingehend überprüft, ob sie mindestens ein vorgegebenes Angriffs-Prüf-Kriterium erfüllt. Erfüllt die Nachricht das Angriffs-Prüf-Kriterium, so wird die Nachricht nicht an das Applikations-Server-Programm weitergeleitet. Die Nachricht kann somit entweder verworfen werden oder an den Absender unmittelbar zurückgesendet werden. Ferner kann in diesem Fall ein Alarm generiert werden, so dass ein Benutzer oder ein Netzwerkverwalter über den versuchten Angriff auf der Ebene der Anwendungsschicht informiert wird.

Die decodierte Nachricht, die das vorgegebene Angriffs-Prüf-Kriterium jedoch nicht erfüllt, wird gemäß dem verwendeten Anwendungsschicht-Protokollformat wiederum codiert und anschließend zu dem Applikations-Server-Programm übertragen, gegebenenfalls nach erfolgter Codierung gemäß den Protokollformaten, welche für die weiteren, unterhalb der Anwendungsschicht angeordneten Kommunikationsschichten verwendet werden.

Eine Anordnung mit einer Proxy-Einheit und einer Einheit zum Ausführen eines Applikations-Server-Programms enthält eine Proxy-Einheit, die die oben beschriebenen Elemente aufweist. Ferner ist ein Applikations-Server-Programm vorgesehen, in dem die decodierte Proxy-Anwendungsschicht-codierte Nachricht verarbeitbar ist.

Anschaulich kann die Erfindung darin gesehen werden, dass ein Firewall bereit gestellt wird, der auf der Ebene der Anwendungsschicht, das heißt der obersten Kommunikationsschicht im Kommunikations-Schichtenmodell eine Überprüfung der übertragenen Nachrichten bereitstellt.

Durch die Erfindung wird erstmals zur Beseitigung der Schwachstellen ein unmittelbares Einspielen eines Patch-Programms auf dem jeweiligen Server des Applikations-Server-Programms vermieden.

Somit kann das Installieren von Aktualisierungsprogrammen für das Applikations-Server-Programm in üblichen Wartungsintervallen vorgenommen werden und muss nicht mehr außerplanmäßig durchgeführt werden.

Weiterhin bleibt erfindungsgemäß die Zertifizierung eines Applikations-Server-Programms erhalten.

Auch ist erfindungsgemäß ein Schutz des Applikations-Server-Programms für den Anwendungsserver gewährleistet, selbst wenn kein Patch-Programm verfügbar ist.

Auch ein Abschalten eines Systems aus entsprechenden Sicherheitsgründen ist erfindungsgemäß nicht mehr erforderlich, ebenso wenig wie die Einschränkung der Kommunikation zwischen den miteinander kommunizierenden Applikations-Server-Programmen.

Die Überprüfung der Nachrichten ist ferner sehr einfach und somit sehr hochperformant möglich, da die Überprüfung auf Zeichen, welche im ASCII-Format codiert sind, erfolgt, anders ausgedrückt auf der Überprüfung von unmittelbar codierten Zeichenketten.

Ein weiterer Vorteil ist in der Skalierung zu sehen, das heißt anders ausgedrückt darin, dass lediglich ein Rechner, nämlich der Rechner mit der Proxy-Einheit erforderlich ist, um eine grundsätzlich beliebige Anzahl von Servern für das jeweilige Applikations-Server-Programm zu schützen.

Bevorzugte Weiterbildungen der Erfindung ergeben sich aus den abhängigen Ansprüchen.

Das Filter ist gemäß einer Ausgestaltung der Erfindung derart eingerichtet, dass mit ihm eine empfangene Nachricht, dessen Nachrichtenlänge größer ist als ein vorgegebener Schwellenwert, herausgefiltert wird.

Gemäß einer alternativen Ausgestaltung der Erfindung ist ein Musterspeicher vorgesehen, in dem zumindest ein vorgegebenes Prüfmuster gespeichert ist und bei der das Filter derart eingerichtet ist, dass damit eine empfangene Nachricht, welche das mindestens eine Prüfmuster enthält, herausgefiltert wird.

Anschaulich können die oben beschriebenen Ausgestaltungen als Ausgestaltungen des Filters angesehen werden, das eine Erkennung unterschiedlicher bekannter vorgegebener Angriffsmuster bereitstellt, basierend auf beispielsweise
- Zeichenketten (Strings, das heißt Signaturen),
- der Länge einer Nachricht oder einer Anfrage an das Applikations-Server-Programm gemäß dem verwendeten Anwendungsschicht-Protokollformat (beispielsweise zum Schutz vor sogenanntem Buffer Overflow), und
- Überprüfungen der Syntax, das heißt Erkennung und Vermeidung von Format-String-Angriffen.

Gemäß einer weiteren Ausgestaltung der Erfindung sind in dem Musterspeicher mehrere Prüfmuster gespeichert und das Filter ist derart eingerichtet, dass eine empfangene Nachricht dann herausgefiltert wird, wenn es zumindest eines der Prüfmuster enthält.

Gemäß diesen Ausgestaltungen sind sehr einfache Möglichkeiten angegeben, übliche Angriffe auf der Ebene der Anwendungsschicht zu erkennen und diese zu vermeiden.

Ferner kann das mindestens eine Prüfmuster ein Angriffsmuster von Nachrichtenelementen sein, wobei das Angriffsmuster für einen Angriff auf das Applikations-Server-Programm verwendet werden kann.

Die Proxy-Einheit weist gemäß einer weiteren Ausgestaltung der Erfindung einen Schlüsselspeicher zum Speichern kryptographischer Schlüssel auf, vorzugsweise zum Speichern der im Rahmen des Electronic Commerce verwendeten asymmetrischen oder symmetrischen kryptographischen Schlüssel der jeweiligen Kommunikationspartner. Weiterhin ist eine Entschlüsselungseinheit zum Entschlüsseln einer empfangenen verschlüsselten Nachricht unter Verwendung eines der gespeicherten kryptographischen Schlüssel, das heißt insbesondere unter Verwendung des dem Empfänger der Nachricht zugeordneten geheimen Schlüssels. Die entschlüsselte Nachricht ist gemäß dieser Ausgestaltung dann dem Filter zur Überprüfung auf der Ebene der Anwendungsschicht zuführbar.

Durch diese Weiterbildung wird der Einsatz der erfindungsgemäßen Proxy-Einheit auch im Rahmen eines mittels einer kryptographischen Sicherheitsarchitektur gesicherten Applikations-Server-Programms ermöglicht, beispielsweise eines WWW-Server-Programms, welches unter Verwendung des SSL-Protokolls eine kryptographisch gesicherte Kommunikation bereitstellt.

Gemäß dieser Ausgestaltung kann es ferner vorgesehen sein, dass eine Verschlüsselungseinheit zum Verschlüsseln einer nicht herausgefilterten Nachricht im Falle einer asymmetrischen Verschlüsselung mit dem öffentlichen Schlüssel des jeweiligen Kommunikationspartners durchgeführt werden kann und im Falle einer symmetrischen Verschlüsselung mit dem jeweiligen symmetrischen Sitzungsschlüssel. Die verschlüsselte Nachricht ist in diesem Fall der Ausgangsschnittstelle zuführbar.

Die Proxy-Einheit und das Applikations-Server-Programm können auf demselben Rechner oder auch auf unterschiedlichen Rechnern installiert sein.

Ausführungsbeispiele der Erfindung sind in den Figuren dargestellt und werden im Weiteren näher erläutert. In den Figuren sind identische Elemente mit gleichen Bezugszeichen versehen.

Es zeigen
- Figur 1: eine Skizze eines Kommunikationssystems mit einer Proxy-Einheit gemäß einem ersten Ausführungsbeispiel der Erfindung;
- Figur 2: eine Skizze, in der der Nachrichtenfluss gemäß den Ausführungsbeispielen der Erfindung dargestellt ist;
- Figur 3: eine Skizze eines Kommunikationssystems gemäß einem zweiten Ausführungsbeispiel der Erfindung.

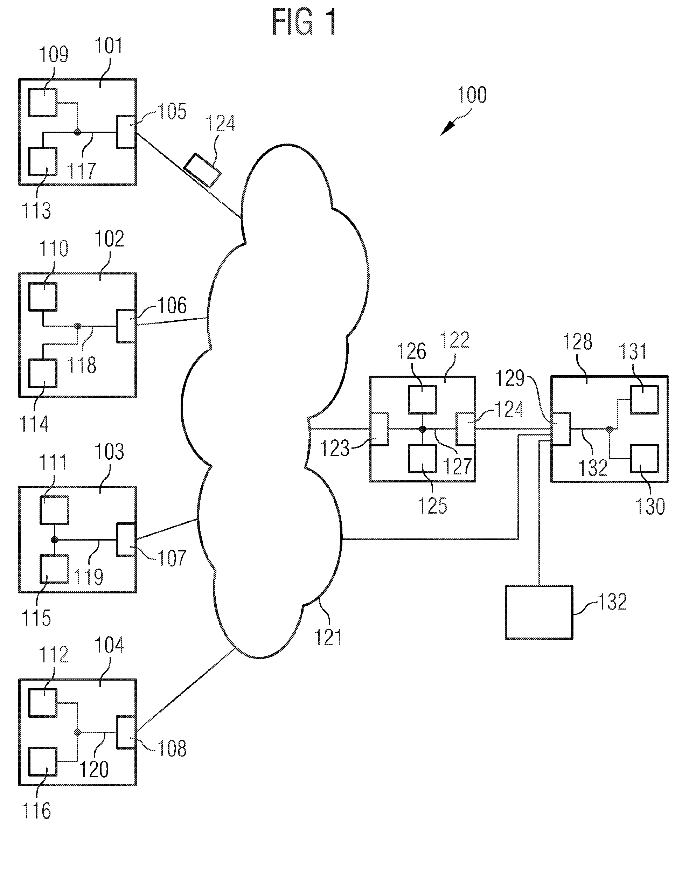

**Figur 1** zeigt ein Kommunikationssystem 100 gemäß einem ersten Ausführungsbeispiel der Erfindung.

Das Kommunikationssystem 100 weist eine Vielzahl von Client-Rechnern 101, 102, 103, 104 auf, wobei jeder Client-Rechner 101, 102, 103, 104 jeweils eine Eingangs/Ausgangsschnittstelle 105, 106, 107, 108 aufweist sowie jeweils einen Prozessor 109, 110, 111, 112 und einen Speicher 113, 114, 115, 116.

In jedem Speicher 113, 114, 115, 116 eines jeweiligen Client-Rechners 101, 102, 103, 104 ist jeweils ein WWW-Browser-Programm, beispielsweise der Internet-Explorer™ oder der Netscape™ Communicator™, gespeichert. Das jeweilige Browser-Programm wird von dem Prozessor 109, 110, 111, 112 ausgeführt.

Die Eingangs-/Ausgangsschnittstelle 105, 106, 107, 108 eines jeweiligen Client-Rechner 101, 102, 103, 104 sowie die Speicher 113, 114, 115, 116 und die Prozessoren 109, 110, 111, 112 sind jeweils über einen Computerbus 117, 118, 119, 120 miteinander gekoppelt.

Die Client-Rechner 101, 102, 103, 104 sind über das Internet 121 als Telekommunikationsnetz mit einem Proxy-Rechner 122 gekoppelt, genauer ausgedrückt mit einer Eingangs/Ausgangsschnittstelle 123 des Proxy-Rechners 122. Der Proxy-Rechner 122 weist ferner eine neben der telekommunikationsnetzseitigen Eingangs/Ausgangsschnittstelle 123 eine serverseitige, im Weiteren auch als rechnernetzseitige Eingangs-/Ausgangsschnittstelle 124 bezeichnete, Eingangs-/Ausgangsschnittstelle auf. Ferner weist der Proxy-Rechner 122 einen Speicher 125 sowie einen Prozessor 126 auf, welcher miteinander sowie mit den beiden Eingangs-/Ausgangsschnittstellen 123, 124 über einen Computerbus 127 gekoppelt sind.

In dem Speicher des Proxy-Rechners 122 sind einerseits in einem als Schlüsselspeicher bezeichneten und vorzugsweise individuell kryptographisch geschützten Speicherbereich die kryptographischen Schlüssel, insbesondere die geheimen Schlüssel der Benutzers des WWW-Server-Programms des Server-Rechners 123, der im Weiteren noch näher erläutert wird, gespeichert. In einem weiteren Speicherbereich, im Weiteren auch als Musterspeicher bezeichnet, sind vorgegebene Prüfmuster gespeichert, deren Bedeutung später noch näher erläutert wird.

Weiterhin ist in dem Speicher ein die Proxy-Einheit realisierendes Programm gespeichert, welches eingehende Nachrichten, welches in dem Proxy-Rechner 122 eingehende Nachrichten, wie im Folgenden im Detail erläutert, bearbeitet.

Von einem Client-Rechner 101, 102, 103, 104 wird eine elektronische Nachricht, gemäß diesem Ausführungsbeispiel eine Get-Anfrage, codiert gemäß dem HTTP-Kommunikationsprotokoll, über das Internet unter Verwendung des TCP (**T**ransport **C**ontrol **P**rotocol) / IP (**I**nternet **P**rotocol)-Protokoll-Stacks zu dem Server-Rechner 128 als Anfrage für die Informationswiedergabe von dem Server-Rechner 128 bereitgestellter Information übertragen.

Es ist in diesem Zusammenhang anzumerken, dass in einer alternativen Ausführungsform der Erfindung die elektronische Nachricht nicht unter Verwendung eines WWW-Browser-Programms erzeugt wird, sondern nur die Syntax gemäß dem Anwendungsprotokoll-Format verwendet wird, ohne dass ein WWW-Browser-Programms auf dem Client-Rechner 101, 102, 103, 104 installiert zu sein braucht. Dies ist insbesondere der Fall, wenn es sich beim Client um ein Angriffsprogramm handelt.

Der Server-Rechner 128 ist über eine Eingangs/Ausgangsschnittstelle 129 mit der serverseitigen Eingangs/Ausgangsschnittstelle 124 des Proxy-Rechners 122 gekoppelt und weist einen Speicher 130 sowie einen Prozessor 131 auf, welche miteinander und mit der Eingangs/Ausgangsschnittstelle 129 über einen Computerbus 132 gekoppelt sind.

Ferner ist ein Bildschirm 132 über die Eingangs/Ausgangsschnittstelle 129 mit dem Server-Rechner 128 gekoppelt.

In dem Speicher 130 des Server-Rechners 128 ist ein WWW-Server-Programm gespeichert. Ferner ist in dem Speicher 130 die den Client-Rechnern 101, 102, 103, 104 bereit gestellte Information in Form beispielsweise einer Homepage sowie darunter hierarchisch angeordneter bereitgestellter Information gespeichert. Die Information kann textuelle Information sein, Standbildinformation, Videoinformation oder auch Audioinformation.

Gemäß diesem Ausführungsbeispiel erfolgt somit die Kommunikation auf Anwendungsschicht gemäß dem HTTP-Protokollformat.

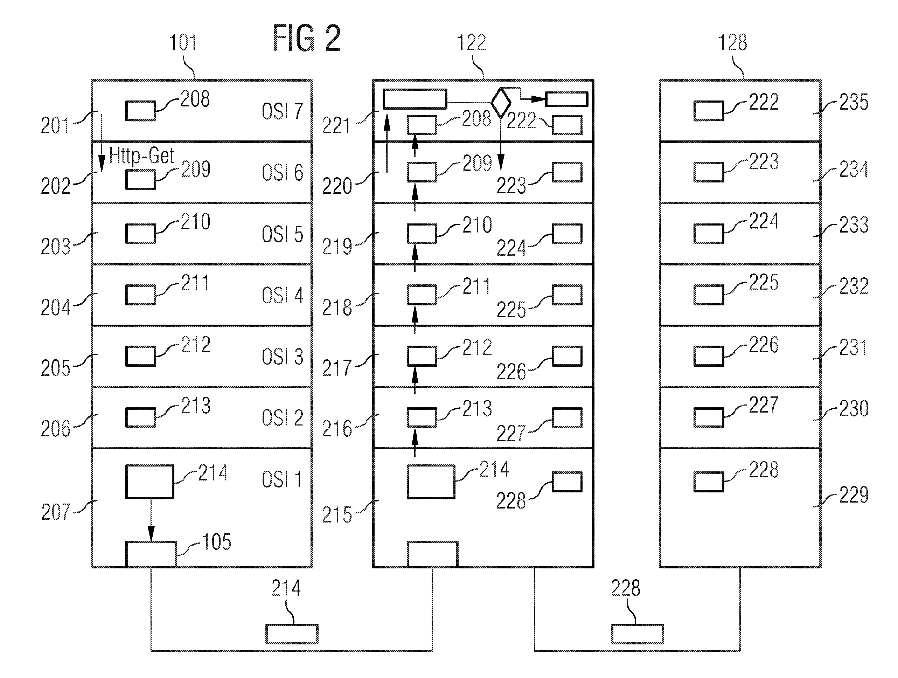

Im Weiteren wird unter Bezugnahme auf **Figur 2** unter der vereinfachten Annahme, dass von dem ersten Client-Rechner 101 eine HTTP-Anfrage an den Web-Server gerichtet wird, das der Erfindung zugrunde liegende Prinzip beschrieben.

In **Figur 2** sind symbolisch für den ersten Client-Rechner 101 die einzelnen Kommunikationsschichten, das heißt
- die Anwendungsschicht 201,
- die Darstellungsschicht 202,
- die Sitzungsschicht 203,
- die Transportschicht 204,
- die Vermittlungsschicht 205,
- die Sicherungsschicht 206, sowie
- die Bitübertragungsschicht 207
dargestellt.

Eine Browser-Programm-Anforderung, das heißt gemäß diesem Ausführungsbeispiel eine HTTP-Get-Nachricht 208 wird von der Anwendungsschicht 201, das heißt gemäß dem bevorzugten Ausführungsbeispiel von dem Browser-Programm des ersten Client-Rechners 101 an die Elemente der Darstellungsschicht übertragen und dort gemäß dem implementierten Schicht 6-Protokoll, das heißt gemäß dem Darstellungsschicht-Protokoll zu einer Darstellungsschicht-codierten Nachricht 209 codiert und der Sitzungsschicht 203 zugeführt, wo sie zu einer Sitzungsschicht-codierten Nachricht 210 codiert wird.

Die Sitzungsschicht-codierte Nachricht 210 wird der Transportschicht 204 zugeführt und dort gemäß dem **T**ransport **C**ontrol **P**rotocol (TCP) codiert zu einer Transportschichtcodierten Nachricht 211.

Die gemäß dem TCP codierte Nachricht 211 wird der Vermittlungsschicht 205 zugeführt und dort gemäß dem **I**nternet **P**rotocol (IP) zu einer Vermittlungsschicht-codierten Nachricht 212 codiert.

Die Vermittlungsschicht-codierte Nachricht 212 wiederum wird der Sicherungsschicht 206 zugeführt und dort gemäß dem verwendeten Protokoll der Sicherungsschicht 206 zu einer Sicherungsschicht-codierten Nachricht 213 codiert.

Schließlich wird in dem ersten Client-Rechner 101 die Sicherungsschicht-codierte Nachricht 213 der Bitübertragungsschicht 207 zugeführt und dort gemäß dem verwendeten Übertragungsverfahren kanalcodiert zu einer Bitübertragungsschicht-codierten Nachricht 214, welche über das Telekommunikationsnetz, das heißt das Internet 121 zu dem Proxy-Rechner 122 übertragen wird.

Entsprechend zu der zuvor beschriebenen Weise der Codierung wird in dem Proxy-Rechner 122 in dessen Bitübertragungsschicht 215 die empfangene Nachricht gemäß dem verwendeten Protokoll der Bitübertragungsschicht 215 decodiert zu der Sicherungsschicht-codierten Nachricht 213, welche der Sicherungsschicht 216 des Proxy-Rechners 122 zugeführt wird.

In der Sicherungsschicht 216 wird die Sicherungsschicht-codierte Nachricht 213 gemäß dem Protokoll der Sicherungsschicht 216 decodiert und die daraus erhaltenen Nutzdaten werden als Vermittlungsschicht-codierte Nachricht 212 der Vermittlungsschicht 217 des Proxy-Rechners 122 zugeführt und dort wiederum gemäß dem Protokoll der Vermittlungsschicht 217, das heißt gemäß diesem Ausführungsbeispiel gemäß dem Internet Protocol, decodiert.

Die aufgrund der Decodierung ermittelten Nutzdaten der Vermittlungsschicht 217 werden als Transportschicht-codierte Nachricht 211 der Transportschicht 218 des Proxy-Rechners 122 zugeführt, um dort gemäß dem TCP-Format decodiert zu werden zu der Sitzungsschicht-codierten Nachricht 210, welche der Sitzungsschicht 219 des Proxy-Rechners 122 zugeführt wird und dort gemäß dem in der Sitzungsschicht 219 verwendeten Protokoll decodiert wird.

Die dadurch ermittelten Nutzdaten stellen die Darstellungsschicht-codierte Nachricht 209 dar und werden in der Darstellungsschicht 220 des Proxy-Rechners 122 gemäß dem in Schicht 6 verwendeten Kommunikationsprotokoll decodiert. Nach erfolgter Decodierung sind die daraus erhaltenen Nutzdaten die ursprünglich codierte Anwendungsschicht-codierte Nachricht 208, welche der Anwendungsschicht 221 des Proxy-Rechners 122 zugeführt wird und dort gemäß dem HTTP decodiert wird.

Die daraus resultierenden Nutzdaten liegen nunmehr in dem Format ASCII vor und werden einer Überprüfung unterzogen, wie sie im Weiteren erläutert wird.

Es ist in diesem Zusammenhang anzumerken, dass erfindungsgemäß auch einzelne Kommunikationsschichten im Rahmen der Kommunikation nicht vorgesehen sein können und deren Funktionalität gemäß dem OSI-Referenzmodell auf andere Schichten aufgeteilt sein können. Es ist lediglich von Bedeutung, dass die im Weiteren beschriebene Filterung der Daten in dem Proxy-Rechner 122 auf der obersten Kommunikationsschicht, der Anwendungsschicht erfolgt.

Die Überprüfung kann auf unterschiedliche Weise erfolgen.

Eine erste Möglichkeit ist, dass für jede Anwendungsschichtdecodierte Nachricht 208 überprüft wird, ob diese eine vorgegebene Länge von Zeichen enthält, um auf diese Weise einen möglichen Buffer Overflow auf der Seite des Server-Rechners 128 zu vermeiden.

Alternativ oder zusätzlich kann ein Vergleich mit vorgegebenen Prüfmustern, wie sie in dem Musterspeicher des Proxy-Rechners 122 gespeichert sind, durchgeführt werden.

Die Prüfmuster stellen bekannte Angriffsmuster dar, welche bekannte Sicherheitslücken des jeweils verwendeten Applikations-Server-Programms, gemäß diesem Ausführungsbeispiel des jeweiligen Browser-Programms ausnützen.

Im Weiteren sind beispielhaft einige Prüfmuster aufgeführt, gegen die die Zeichenkette der Anwendungsschicht-decodierten Nachricht geprüft wird. Die Prüfmuster sind in Prüfmusterbeispielgruppen gruppiert, wobei die Prüfmuster der einzelnen Prüfmusterbeispielgruppen jeweils Agriffsmuster hinsichtlich bestimmter Schwachstellen des Applikations-Server-Programms darstellen:

### Prüfmusterbeispielgruppe 1:

#microsoft backdoor
200 OK-> HEAD :/_vti_bin/_vti_aut/dvwssr.dll ^/_vti_bin/_vti_aut/dvwssr.dll;

Wäre auf dem WWW-Server die Datei dvwssr.dll im Verzeichnis /_vti_bin/_vti_aut/ vorhanden sein, dann könnte über eine Schwachstelle in dieser Datei der WWW-Server kompromittiert werden.

### Prüfmusterbeispielgruppe 2:

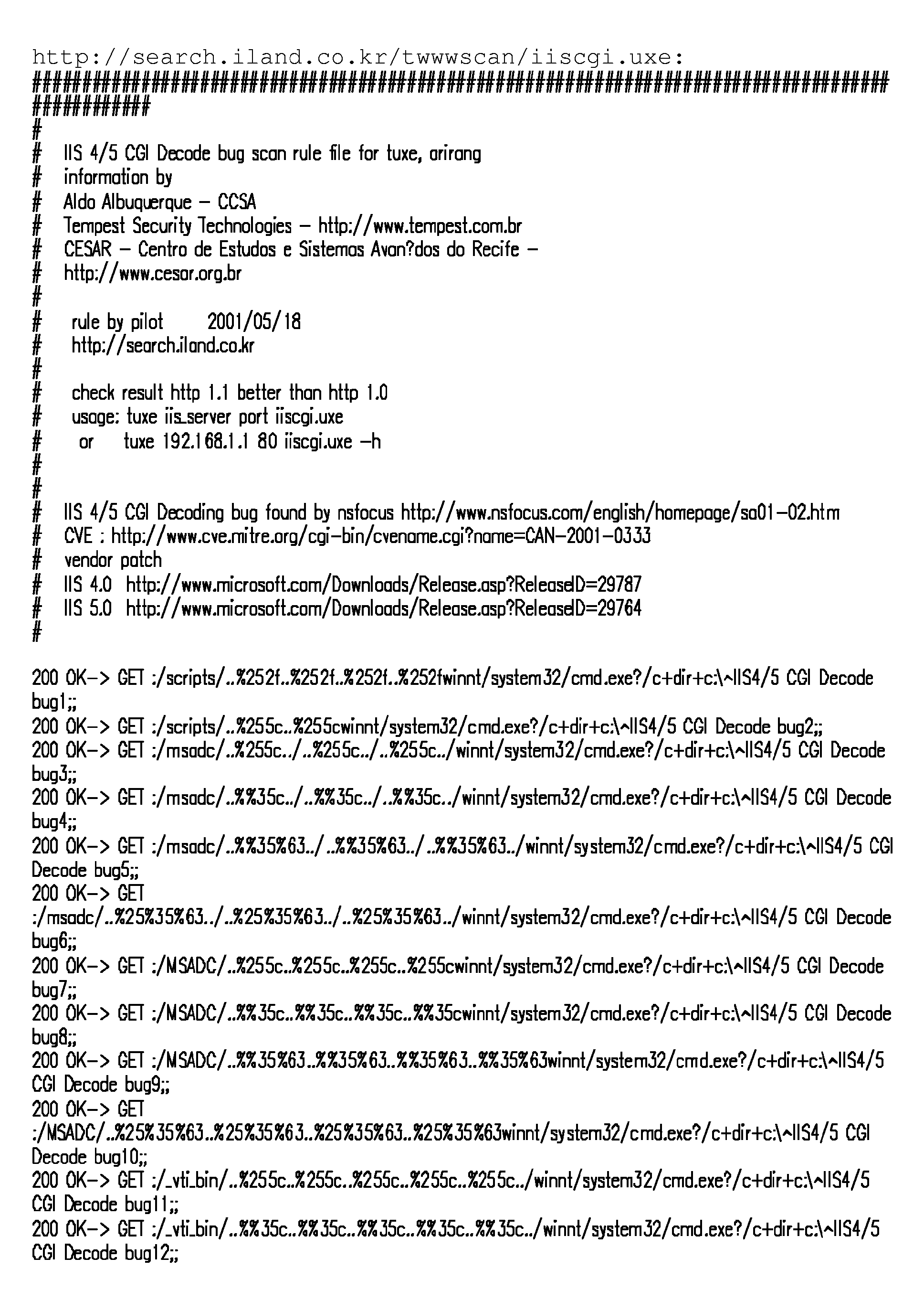

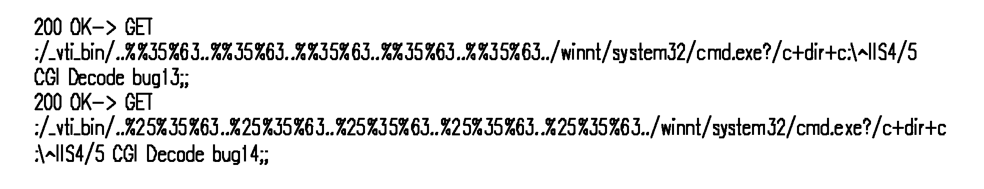

### Prüfmusterbeispielgruppe 3:

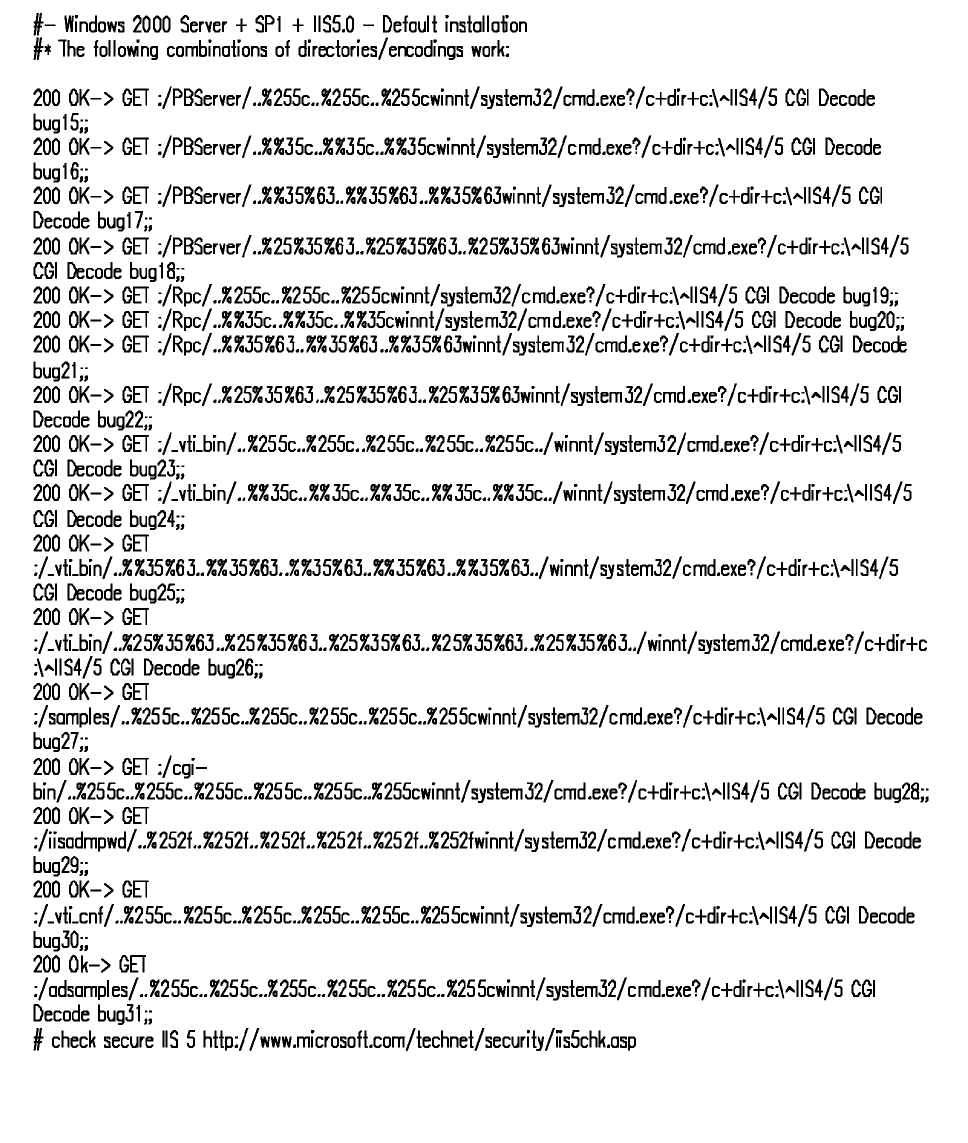

### Prüfmusterbeispielgruppe 4:

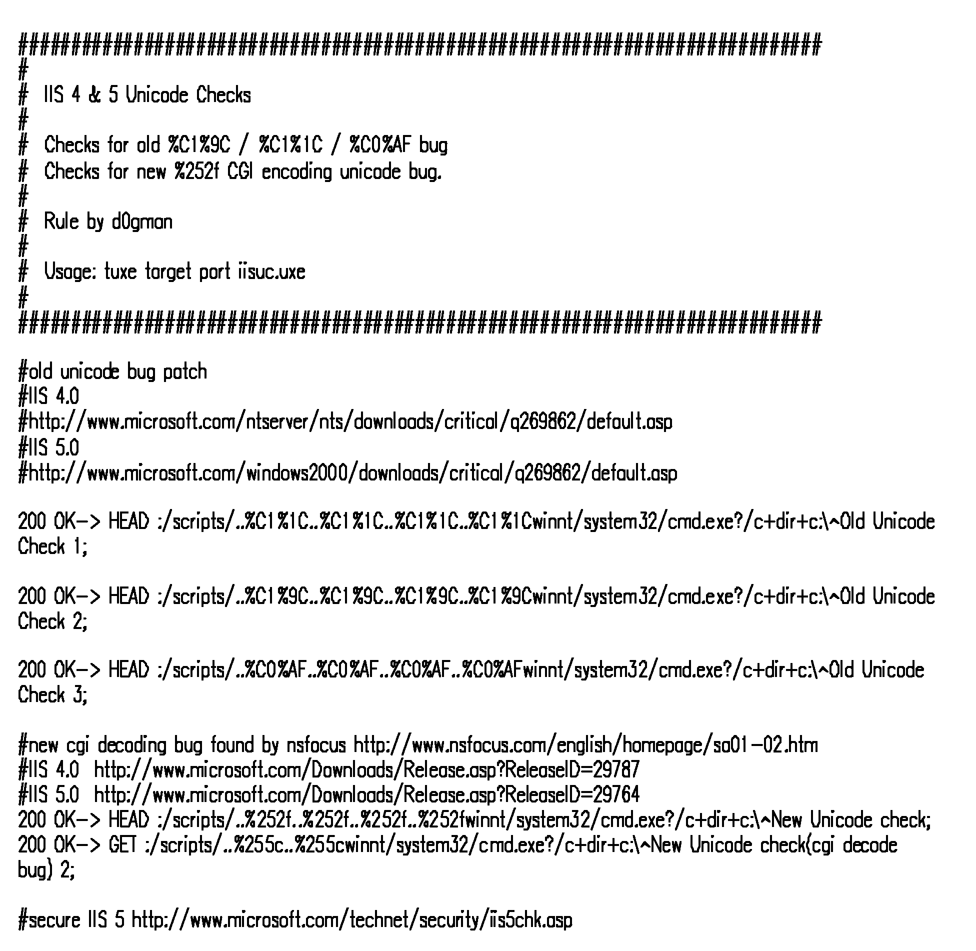

### Prüfmusterbeispielgruppe 5:

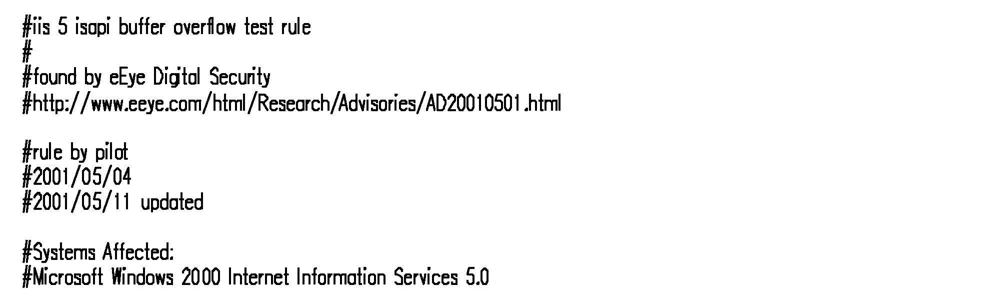

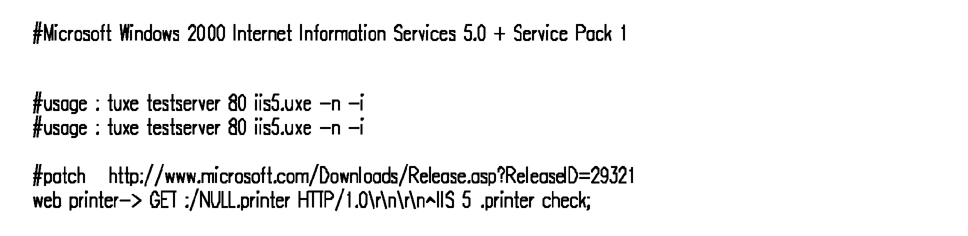

### Prüfmusterbeispielgruppe 6:

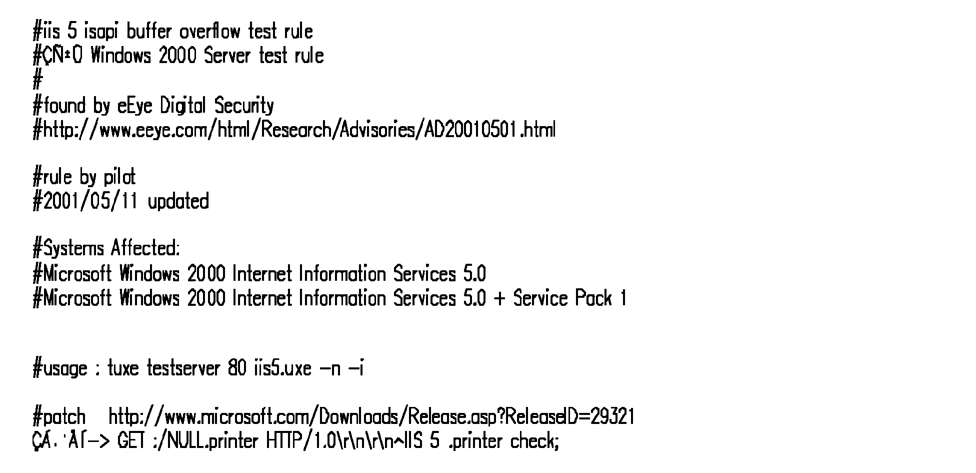

### Prüfmusterbeispielgruppe 7:

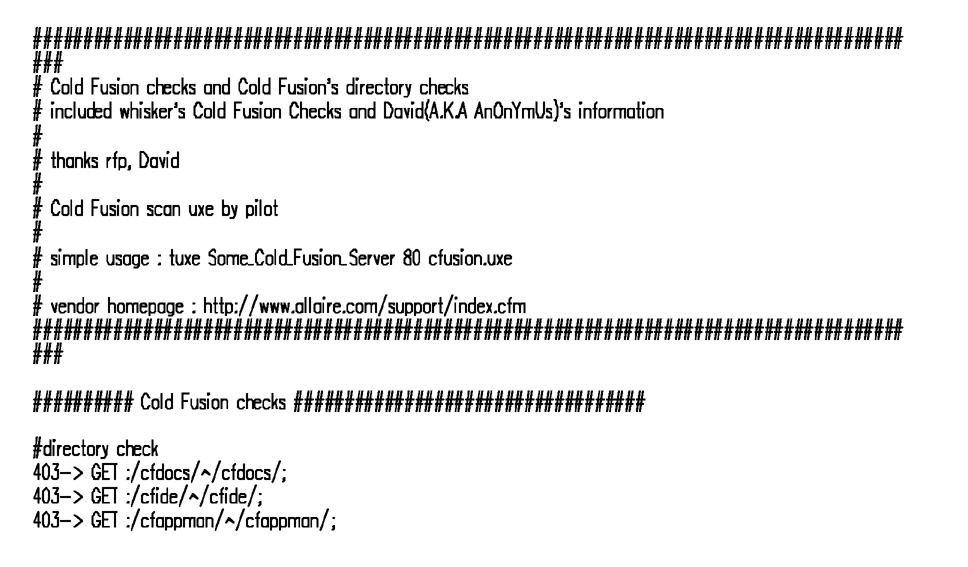

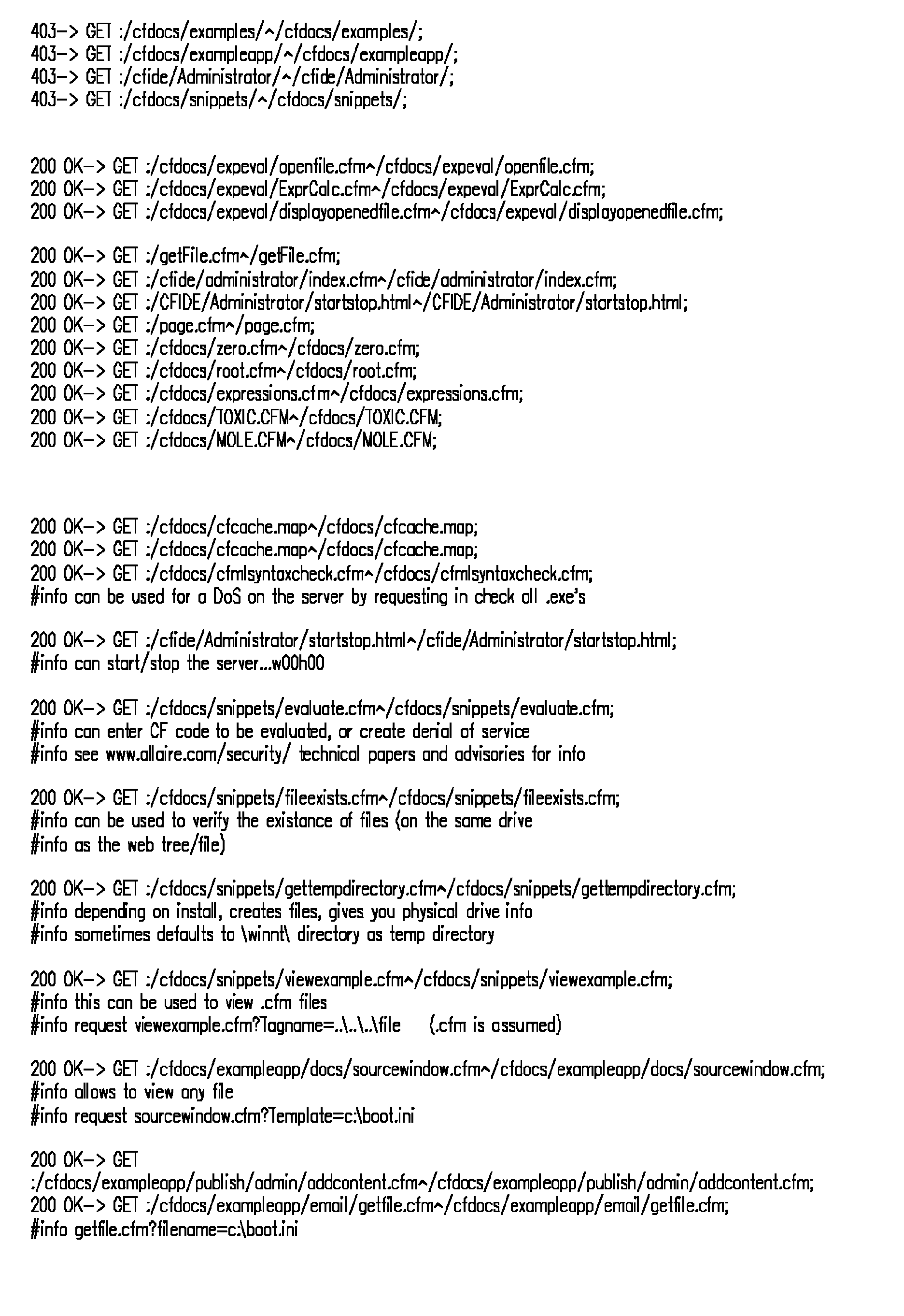

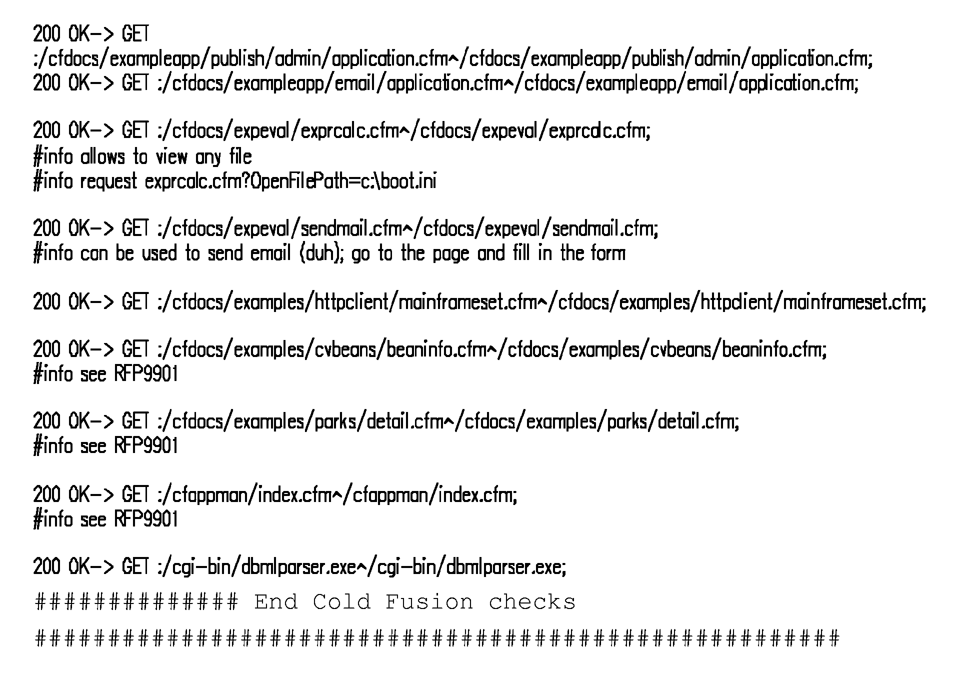

### Prüfmusterbeispielgruppe 8:

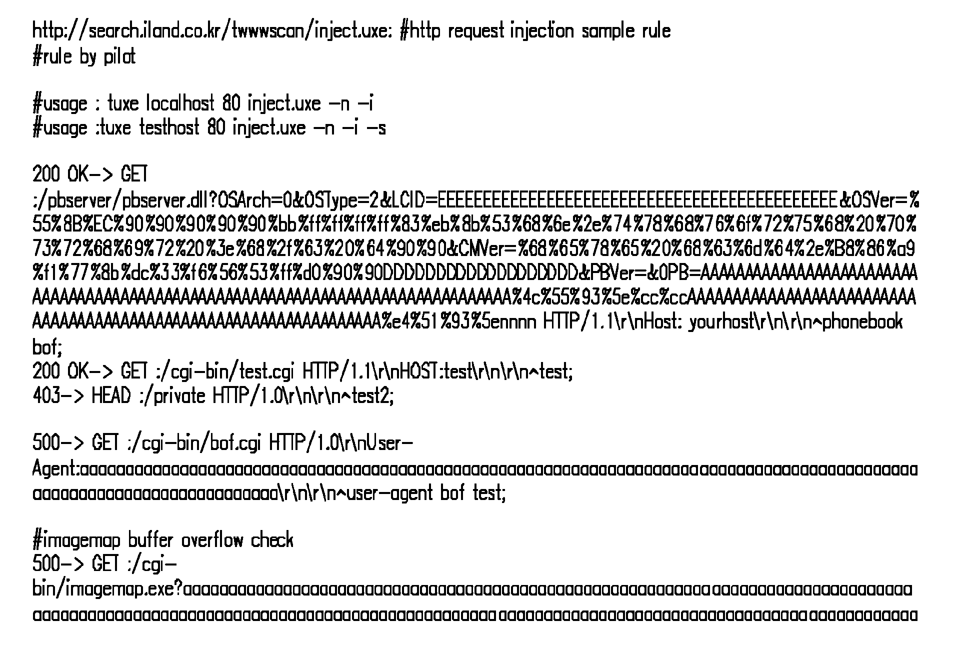

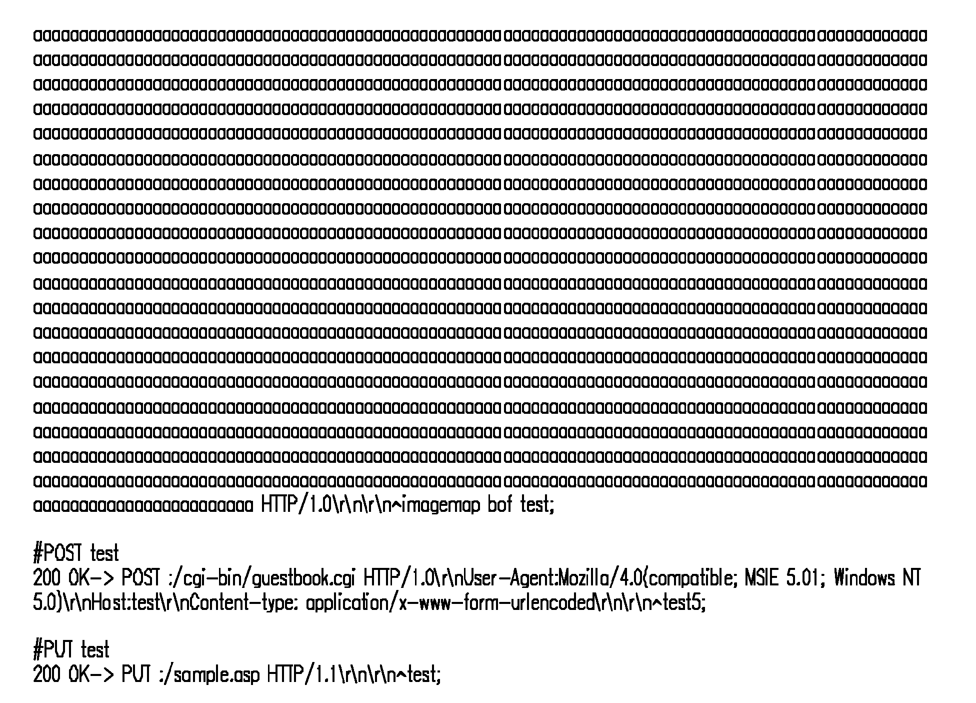

Anschaulich erfolgt ein Zeichenketten-Vergleich der decodierten Nachricht mit dem jeweiligen gespeicherten Prüfmuster.

Stimmen die Zeichenketten der decodierten Nachricht und eines Prüfmusters miteinander überein, so bedeutet dies, dass die ursprüngliche Anwendungsschicht-codierte Nachricht einen Angriffs-Code, das heißt anschaulich ein Angriffsmuster, aufweist, mit dem ein Angriff auf das WWW-Server-Programm des Web-Servers 128 gestartet werden soll.

In diesem Fall wird die decodierte Nachricht nicht weiter an den Server-Rechner 128 übertragen, sondern es wird eine Alarmmeldung generiert und an den Netzwerk-Administrator ausgegeben. Alternativ kann in einem solchen Fall die decodierte Nachricht auch einfach nur verworfen werden. Weiterhin kann alternativ dem Absender der decodierten Nachricht eine Mitteilung übermittelt werden, dass die decodierte Nachricht als eine ein Angriffs-Muster enthaltende Nachricht erkannt wurde.

Stimmen die Zeichenketten jedoch nicht überein, das heißt stimmt die Zeichenkette oder ein Teil der Zeichenkette der Anwendungsschicht-decodierten Nachricht 208 nicht mit zumindest einem der gespeicherten Angriffsmuster überein, so bedeutet dies, dass die WWW-Server-Programm-Anfrage 208 zulässig ist und für den Server-Rechner 128, das heißt genauer ausgedrückt für das Applikations-Server-Programm des Server-Rechners 128 ungefährlich ist.

In diesem Fall wird von dem Proxy-Rechner 122 in dessen Anwendungsschicht 221 die decodierte Nachricht 208 wiederum gemäß dem Protokoll der Anwendungsschicht, gemäß diesem Ausführungsbeispiel gemäß dem HTTP-Protokollformat zu einer Proxy-Anwendungsschicht-codierten Nachricht 222, welche der Darstellungsschicht 220 zugeführt wird, codiert und dort weiter zu einer Proxy-Darstellungsschicht-codierten Nachricht 223 codiert wird.

Die Proxy-Darstellungsschicht-codierte Nachricht 223 wird der Sitzungsschicht 219 des Proxy-Rechner 122 zugeführt und dort zu einer Proxy-Sitzungsschicht-codierten Nachricht 224 codiert und der Transportschicht 218 zugeführt und dort gemäß dem TCP zu einer Proxy-Transportschicht-codierten Nachricht 225 codiert.

Die Proxy-Transportschicht-codierte Nachricht 225 wird der Vermittlungsschicht des Proxy-Rechners 122 zugeführt und dort gemäß dem IP zu einer Proxy-Vermittlungsschicht-codierten Nachricht 226 codiert.

Die Proxy-Vermittlungsschicht-codierte Nachricht 226 wird der Sicherungsschicht 216 zugeführt und dort gemäß dem verwendeten Protokoll der Sicherungsschicht 216 zu einer Proxy-Sicherheitsschicht-codierten Nachricht 227 codiert und anschließend der Bitübertragungsschicht 215 zugeführt, wo sie gemäß dem verwendeten Protokoll der Bitübertragungsschicht zu einer Proxy-Bitübertragungsschicht-codierten Nachricht 228 codiert wird und über das serverseitige Rechnernetz, beispielsweise ein lokales Rechnernetzwerk (Local Area Network) übertragen wird zu dem Server-Rechner 128.

Das Server-Rechner 128 weist ebenso wiederum die entsprechenden Elemente der Kommunikationsschichten auf und es erfolgt serverseitig durch den Server-Rechner 128 in dessen Bitübertragungsschicht 229 eine Decodierung der Proxy-Bitübertragungsschicht-codierten Nachricht 228.

Die daraus resultierenden, decodierten Nutzdaten werden der Sicherungsschicht 230 zugeführt und dort wiederum decodiert.

Die daraus resultierende Proxy-Vermittlungsschicht-codierte Nachricht 226 wird der Vermittlungsschicht 231 zugeführt und gemäß dem Internet Protokoll decodiert. Die daraus resultierenden Nutzdaten stellen die Proxy-Transportschicht-codierte Nachricht 225 dar, welche der Transportschicht 232 des Server-Rechners zugeführt wird und dort gemäß dem TCP weiter decodiert wird.

Die daraus resultierende Proxy-Sitzungsschicht-codierte Nachricht 224 wird der Sitzungsschicht 233 des Server-Rechners 128 zugeführt und dort gemäß dem Protokoll der Sitzungsschicht 233 decodiert.

Die aufgrund der Decodierung ermittelten Nutzdaten stellen die Proxy-Darstellungsschicht-codierte Nachricht 223 dar und werden der Darstellungsschicht 234 zugeführt.

Nach erfolgter Decodierung ist nunmehr die Proxy-Anwendungsschicht-codierte Nachricht 222 ermittelt, welche dem Browser-Programm des Server-Rechners 128 in der Anwendungsschicht 235 zugeführt und dort verarbeitet wird.

Anders ausgedrückt bedeutet dies, dass der nunmehr decodierte und dem Web-Server-Programm des Server-Rechners 128 zugeführte HTTP-Get-Request bearbeitet werden kann und es werden die angeforderten Informationen an den ersten Client-Rechner 101 codiert in entsprechend inverser Weise wie oben beschrieben und an den ersten Client-Rechner 101 über das Internet übertragen.

Die Übertragung der angeforderten Daten, die an den ersten Client-Rechner 101 übertragen werden, erfolgt gemäß diesem Ausführungsbeispiel ebenfalls über den Proxy-Rechner 122 gemäß den jeweils verwendeten Kommunikationsprotokollen.

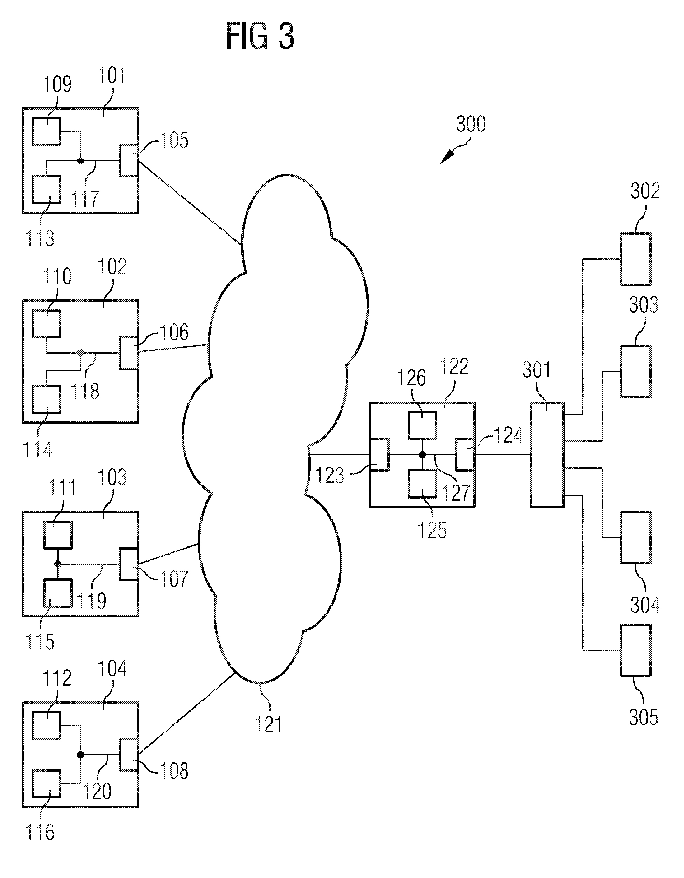

**Figur 3** zeigt eine alternative Ausführungsform eines Kommunikationssystems 300 gemäß einem zweiten Ausführungsbeispiel der Erfindung.

Die Struktur gemäß dem zweiten Ausführungsbeispiel ist der Struktur des Kommunikationssystems 100 aus dem ersten Ausführungsbeispiel sehr ähnlich, unterscheidet sich im Wesentlich lediglich dadurch, dass hinter den Proxy-Rechner 122, das heißt in serverseitiger Kommunikationsrichtung ein Reverse-Proxy 301 zwischengeschaltet ist zur Lastverteilung eingehender HTTP-Get-Anforderungen an eine Vielzahl von Anwendungsservern 302, 303, 304, 305.

Somit entspricht anschaulich das Kommunikationssystem 300 gemäß dem zweiten Ausführungsbeispiel der in [3] beschriebenen Architektur eines Reverse-Proxy mit einer vorgeschalteten Proxy-Einheit 122 gemäß der Erfindung.

Es ist in diesem Zusammenhang anzumerken, dass für den Fall, dass ein bestimmter Patch, welcher einen bekannten Angriff mit den entsprechenden Angriffsmustern vermeidet, diese Angriffsmuster in dem Musterspeicher gelöscht werden können und dieser entsprechende Schutzmechanismus und der zugehörige Schutzfilter abgeschaltet werden kann.

Gemäß einer alternativen Ausgestaltung der Erfindung ist es vorgesehen, dass das Browser-Programm, das heißt der Internet-Browser, und das WWW-Server-Programm einen Verschlüsselungsmechanismus, beispielsweise gemäß dem in [2] beschriebenen Secure Sockets Layer verwenden.

In diesem Fall enthält die Proxy-Einheit 122 jeweils eine Verschlüsselungs- und Entschlüsselungseinheit, um die entsprechend verschlüsselten Daten zu entschlüsseln, um auf diese Weise auf die unverschlüsselten Anwendungsschicht-decodierten Nachrichten die Prüfung, das heißt den Filtermechanismus anzuwenden und anschließend wiederum die Daten unter Verwendung der jeweiligen Schlüssel, die in dem Schlüsselspeicher des Proxy-Rechner 122 gespeichert sind, an den Server-Rechner 128 in verschlüsselter Weise zu übertragen. Auf diese Weise wird auch die Übertragung vertraulicher Daten im Rahmen einer E-Commerce-Transaktion gewährleistet.

Weiterhin ist anzumerken, dass der Proxy-Rechner nicht unbedingt als eigenständiger Rechner vorgesehen sein muss, sondern auch als Proxy-Einheit in dem Server-Rechner 128 integriert sein kann, in welchem Fall jedoch zu gewährleisten ist, dass jede eingehende Nachricht, welche an das zu schützende Applikations-Server-Programm Server-Rechners 128 gerichtet ist, zunächst dem Filtermechanismus in der Proxy-Einheit unterzogen wird.

In diesem Dokument sind folgende Veröffentlichungen zitiert:
[1] A. S. Tanenbaum, Computernetzwerke, Pearson-Studium, ISBN 3-8273-7011-6, S. 45 - 52, 2000
[2] US 5,657,390
[3] M. Payer, Computervermittelte Kommunikation, Kapitel 13, Seite 1-8, erhältlich im Internet am 07.09.2001 unter der folgenden Internet-Adresse:
   http://devedge.netscape.com/docs/manuals/proxy/adminux/r evpxy.htm

## Patentansprüche

1. Proxy-Einheit
• mit einer telekommunikationsnetzseitigen Eingangsschnittstelle, mittels der eine Anwendungsschicht-codierte Nachricht empfangen werden kann,
• mit einer Decodiereinheit zum Decodieren der empfangenen Anwendungsschicht-codierten Nachricht gemäß einem Anwendungsschicht-Protokollformat,
• mit einem Filter, mit dem eine empfangene Nachricht, welche das mindestens ein vorgegebenes Angriffs-Prüfkriterium erfüllt, herausgefiltert wird,
• mit einer Codiereinheit zum Codieren von einer nicht herausgefilterten Nachricht zu einer Proxy-Anwendungsschicht-codierten Nachricht gemäß dem Anwendungsschicht-Protokollformat,
• mit einer rechnernetzseitigen Ausgangsschnittstelle, mittels der die Proxy-Anwendungsschicht-codierte Nachricht zu einem Applikations-Server-Programm übertragen werden kann.

2. Proxy-Einheit nach Anspruch 1,
bei der das Filter derart eingerichtet ist, dass mit ihm eine empfangene Nachricht, dessen Nachrichtenlänge größer ist als ein vorgegebener Schwellenwert, herausgefiltert wird.

3. Proxy-Einheit nach Anspruch 1,
• mit einem Musterspeicher, in dem zumindest ein vorgegebenes Prüfmuster gespeichert ist,
• bei der das Filter derart eingerichtet ist, dass mit ihm eine empfangene Nachricht, welche das mindestens eine Prüfmuster enthalten, herausgefiltert wird,

4. Proxy-Einheit nach Anspruch 3,
• bei der mehrere Prüfmuster in dem Musterspeicher gespeichert sind, und
• bei der das Filter derart eingerichtet ist, dass eine empfangene Nachricht dann herausgefiltert wird, wenn sie mindestens eines der Prüfmuster enthält.

5. Proxy-Einheit nach Anspruch 3 oder 4,
bei der das mindestens eine Prüfmuster eine Angriffsmuster von Nachrichtenelementen ist, welches Angriffsmuster für einen Angriff auf das Applikations-Server-Programm verwendet werden kann.

6. Proxy-Einheit nach einem der Ansprüche 1 bis 5,
• mit einem Schlüsselspeicher zum Speichern kryptographischer Schlüssel,
• mit einer Entschlüsselungseinheit zum Entschlüsseln einer empfangenen verschlüsselten Nachricht unter Verwendung eines der gespeicherten kryptographischen Schlüssel,
• wobei die entschlüsselte Nachricht dem Filter zuführbar ist.

7. Proxy-Einheit nach einem der Ansprüche 1 bis 6,
• mit einer Verschlüsselungseinheit zum Verschlüsseln einer nicht herausgefilterten Nachricht,
• wobei die verschlüsselte Nachricht der Ausgangsschnittstelle zuführbar ist.

8. Verfahren zum rechnergestützten Schützen eines Applikations-Server-Programms,
• bei dem eine Anwendungsschicht-codierte Nachricht in einer Proxy-Einrichtung empfangen wird,
• bei dem die empfangene Anwendungsschicht-codierte Nachricht gemäß einem Anwendungsschicht-Protokollformat decodiert wird,
• bei dem überprüft wird, ob die decodierte Nachricht mindestens ein vorgegebenes Angriffs-Prüfkriterium erfüllt,
• bei dem die decodierte Nachricht nur dann gemäß dem Anwendungsschicht-Protokollformat der Anwendungsschicht codiert wird und zu dem Applikations-Server-Programm übertragen wird, wenn das vorgegebene Angriffs-Prüfkriterium nicht erfüllt ist.

9. Anordnung mit einer Proxy-Einheit und einer Einheit zum Ausführen eines Applikations-Server-Programms,
bei der die Proxy-Einheit aufweist:
• eine telekommunikationsnetzseitige Eingangsschnittstelle, mittels der eine Anwendungsschicht-codierte Nachricht empfangen werden kann,
• eine Decodiereinheit zum Decodieren der empfangenen Anwendungsschicht-codierten Nachricht gemäß einem Anwendungsschicht-Protokollformat,
• ein Filter, mit dem eine empfangene Nachricht, welche das mindestens ein vorgegebenes Angriffs-Prüfkriterium erfüllt, herausgefiltert wird,
• eine Codiereinheit zum Codieren von einer nicht herausgefilterten Nachricht zu einer Proxy-Anwendungsschicht-codierten Nachricht gemäß einem Anwendungsschicht-Protokollformat,
• eine rechnernetzseitige Ausgangsschnittstelle, mittels der die Proxy-Anwendungsschicht-codierte Nachricht zu einem Applikations-Server-Programm übertragen werden kann,
mit einem Applikations-Server-Programm, in dem die decodierte Proxy-Anwendungsschicht-codierte Nachricht verarbeitbar ist.

10. Anordnung nach Anspruch 9,
bei der die Proxy-Einrichtung und die Einheit zum Ausführen eines Applikations-Server-Programms auf unterschiedlichen Rechnern implementiert sind.
